# EUROPÄISCHE PATENTANMELDUNG

(11) **EP 0 836 068 A1**
(43) Veröffentlichungstag der Anmeldung: **15.04.1998**
(21) Anmeldenummer: 97113661.9
(22) Anmeldetag: 07.08.1997
(51) Int. Cl.: F41G 3/26, G01S 17/74

(54) **Gefechts-Kommunikationssystem**

(30) Priorität: 11.10.1996 US 731365
(71) Anmelder: Oerlikon-Contraves AG, 8050 Zürich (CH)
(72) Erfinder: Gerber, Peter, 8965 Berikon (CH); Staub, Karl, 8126 Zumikon (CH)
(74) Vertreter: Hotz, Klaus, Dipl.-El.-Ing./ETH

(57) **Zusammenfassung**

Das Gefechts-Kommunikationssystem der vorliegenden Erfindung wird zur Freund-Feind-Erkennung, simulierten Schussabgabe während Übungen und/oder zum Zielen während eines Gefechts bei gleichzeitigem Schiessen in der Dunkelheit verwendet. Jeder Teilnehmer trägt ein Gurtsystem **2**, **3**, welches Licht-Detektoren **5** und Kontrolleinheiten **1** sowie eine auf einer Schusswaffe montierte Laservorrichtung **4** umfasst. Zur Simulation eines Schusses oder zur Identifikation richtet ein Teilnehmer seine Waffe auf ein potentielles Ziel aus und beleuchtet es mit einen Laser-Lichtstrahl. Wenn es sich bei dem Ziel um einen weiteren ein Gurtsystem **2**, **3** tragenden Teilnehmer handelt, antwortet sein Gurtsystem über ein Funk-, Ultraschall-, oder Lichtsignal. Die Trägerfrequenzen des Antwort-Signals können von der abfragenden Einheit bestimmt und deren Wert durch den Laser-Lichtstrahl übermittelt werden.

## Beschreibung

Die Erfindung betrifft ein Verfahren und eine Anordnung zur Kommunikation unter Teilnehmern eines Gefechtes und/oder der Simulation eines solchen.

Derartige Kommunikationsmöglichkeiten unter Soldaten sind sowohl im Training als auch unter realen Gefechtsbedingungen von herausragender Wichtigkeit. Im Speziellen ist die Einweg- oder Zweiweg-Kommunikation zwischen jeweils zwei Individuen notwendig für den Betrieb von Freund-Feind-Erkennungssystemen (IFF) und von Gefechts-Simulationssystemen.

Ein verwandtes Kommunikationssystem zur Gefechtssimulation besteht z.B. aus Laser-Sendern, die auf Schusswaffen angebracht sind und Licht-Detektoren auf potentiellen Zielen auslösen. Die vom Laser ausgelösten Detektoren bewirken eine Darstellung der Wirkung entsprechender Schusswaffen.

In einem bekannten Freund-Feind-Erkennungssystem , welches in der europäischen Patent-Anmeldung ***EP 0 254 197*** beschrieben ist, werden gleichzeitig Laser- und Funksignale zu einem potentiellen Ziel gesandt. Im Falle des Empfangs dieser beiden Signale wird im Ziel mit einem Funksignal geantwortet, um die eigene Identität zu bestätigen. Bei anderen Systemen, die durch die deutschen Patent-Anmeldungen ***DE 22 15 295*** und ***DE 22 15 463*** offengelegt sind, wird moduliertes Laserlicht zur Abfrage eines potentiellen Ziels verwendet, welches dann über ein Funksignal oder mittels eines Laserstrahls antwortet. Ein ähnliches System wird auch zur Identifizierung von Tieren verwendet und ist durch die europäische Patent-Anmeldung ***EP 0 108 643*** geoffenbart.

Alle diese bekannten Systeme sind schwierig zu betreiben und sind anfällig für unerwünschtes Übersprechen zwischen gleichzeitig erfolgenden Übertragungen.

Folglich ist es eine Aufgabe der Erfindung, ein Verfahren und eine Anordnung zur Kommunikation unter den Bedingungen eines Gefechts zu gewährleisten, das zur Freund-Feind-Erkennung und/oder Gefechtssimulation tauglich ist, das einen einfachen Aufbau aufweist und einen sicheren und zuverlässigen Betrieb ermöglicht.

Im folgenden werden die genannten sowie weitere Merkmale der Erfindung erläutert, die in der nachfolgenden Beschreibung in einer vollständigeren Weise geoffenbart werden.

Die Anordnung zur Kommunikation in unter Teilnehmern eines Gefechtes und o/oder der Simulation eines solchen mittels Abfrage- und Antwort-Einheiten ist dadurch gekennzeichnet, dass jede Abfrage-Einheit einen Laser-Sender eines Laser-Vorrichtung zur Abstrahlung eines zur Abfrage verwendeten Lichtstrahls, einen Modulator zur Codierung von Abfrage-Daten auf dem zur Abfrage verwendeten Lichtstrahl, sowie einen Empfänger zur Detektion des zur Antwort zurückgesendeten Signals umfasst. Jede Antwort-Einheit beinhaltet wenigstens einen Detektor zwecks Empfang des zur Abfrage verwendeten Lichtstrahls, wenigstens einen Demodulator zur Dekodierung von dem Abfrage-Daten sowie einen Sender mit wählbarer Trägerfrequenz zur Abstrahlung des Empfangssignals auf der Trägerfrequenz, wobei die Trägerfrequenz durch einen Frequenz-Code aus den Abfrage-Daten bestimmt wird.
Das dabei angewandte Verfahren zur Kommunikation unter Gefechtsbedingungen zwischen einer Abfrage- und einer Antwort-Einheit umfasst mehrere Schritte. Zunächst wird von der abfragenden Einheit eine unbenutzte für die Antwort vorgesehene Frequenz ermittelt. Dann wird zur Abfrage ein modulierter Lichtstrahl zu dem potentiellen Ziel geschickt, welcher mit Daten moduliert ist, in denen eine zur Verfügung stehende Frequenz zur Rücksendung der Antwort encodiert ist. Die Antwort-Einheit am Ziel des Lichtstrahls empfängt und decodiert besagten Lichtstrahl, um auf der übermittelten freien Frequenz ein vereinbartes Antwort-Signal auszusenden.

Unter diesem Aspekt dient die Modulation des von der Abfrage-Einheit ausgesendeten Lichtstrahls der Übermittlung eines Abfrage-Signals, welches die von der Abfrage-Einheit zur Übermittlung der Antwort überwachte Frequenz übermittelt. Das Abfrage-Signal kann aber auch zur Übermittlung zusätzlicher Information dienen, wie zum Beispiel der Identität und/oder der Position der Abfrage-Einheit. Durch Übermittlung einer zu verwendenden Frequenz zur Aussendung der Antwort werden gegenseitige Störungen unter konkurierenden Freund-Feind-Erkennungs-Vorgängen vermieden und ausserdem die Sicherheit der Übermittlung erhöht.

Ein weiterer Aspekt der Erfindung betrifft eine Anordnung zur Kommunikation unter Gefechtsbedingungen, welche Abfrage- sowie Antwort-Einheiten umfasst, wobei jede Abfrage-Einheit einen Laser-Sender zur Abstrahlung eines zur Abfrage verwendeten Lichtstrahls, einen Modulator zur Encodierung von zur Abfrage erforderlichen Daten auf den zur Abfrage verwendeten Lichtstrahl sowie einem Ultraschall-Empfänger zum Empfang eines Ultraschall-Antwortsignals beinhaltet. Jede Antwort-Einheit umfasst wenigstens einen Detektor zum Empfang des zur Abfrage verwendeten Lichtstrahls, wenigstens einen Demodulator zur Dekodierung der auf zur Abfrage verwendeten Lichtstrahl modulierten Daten und einen Ultraschall-Sender zur Erzeugung des Antwort-Signals zur Erwiederung auf den abfragenden Lichtstrahl.

Eine Ultraschall-Welle, d.h. eine Schallwelle mit einer Frequenz über 20 kHz, ist (auf Entfernung) schwer zu detektieren und stellt ein geeignetes Mittel dar, Überschneidungen mit bestehenden Kommunikationssystemen zu vermeiden.

In einer weiteren Ausführung der Erfindung umfasst die Anordnung zur Kommunikation unter Gefechtsbedingungen Abfrage- sowie Antwort-Einheiten, wobei jede Abfrage-Einheit aus einem Laser-Sender zur Abstrahlung eines zur Abfrage verwendeten Lichtstrahls, einem Modulator zur Codierung von zur Abfrage nötigen Daten auf dem zur Abfrage verwendeten Lichtstrahl sowie einem auf Lichtsignale ausgelegten Empfänger zum Empfang eines Antwort-Signals besteht. Jede Antwort-Einheit umfasst hierbei wenigstens einen Detektor zum Empfang des zur Abfrage verwendeten Lichtstrahls, wenigstens einen Demodulator zur Dekodierung der zur Abfrage verwendeten Daten aus dem zur Abfrage verwendeten Lichtstrahl sowie wenigstens einer in weitem Winkel emittierenden Lichtquelle zur Erzeugung des Antwort-Signals zur Erwiederung auf des zur Abfrage verwendeten Lichtstrahls.
Der Gebrauch eines im weiten Winkel abgestrahlten Lichtsignals umfasst den Vorteil, dass die antwortende Einheit nicht den Standort der abfragenden Einheit kennen muss. Zur Optimierung der Reichweite solcher Systeme ist die abfragende Einheit vorzugsweise mit einer abbildenden Optik ausgerüstet, die zwecks optischer Abbildung der antwortenden Einheit auf den Lichtempfänger in ihrer abbildenden Wirkung in paralleler Richtung zur Ausbreitungsrichtung des Lichtstrahls des Lasersenders optimiert ist.

Die erfindungsgemässen Abfrage- und Antwort-Einheiten können sowohl zur Freund-Feind-Erkennung als auch zur Simulation von Gefechten verwendet werden. Bei beiden Anwendungen sendet zuerst die Abfrage-Einheit einen modulierten Lichtstrahl zum Ziel. Der modulierte Lichtstrahl beinhaltet als Information vorzugsweise die angeforderte Frequenz des Antwort-Signals. Nach Empfang des zur Abfrage verwendeten Lichtstrahls dekodiert die Antwort-Einheit vorzugsweise aus diesem die angeforderte Frequenz des Antwort-Signals und setzt diese in ihrem eigenen Sender, um das Antwort-Signal abzusetzten. Das Antwort-Signal kann einen Identifikations-Code der Antwort-Einheit enthalten (zur Freund-Feind-Erkennung), und/oder den einzelnen getroffenen Detektor identifizieren (zur Treffer-Analyse bei Gefechts-Simulationen).
Überschneidungen zwischen konkurrierenden Kommuikationsvorgängen können weiter reduziert werden, indem die Antwort-Einheit mit einer eine zufällige Verzögerung erzeugenden Vorrichtung ausgerüstet wird, die eine zufällige Zeitdauer bestimmt, nach welcher das Antwort-Signal abgesetzt wird.

Vorzugsweise arbeiten die verwendeten Laser im Infrarot-Bereich (bevorzugt wird der Nahinfrarotbereich von 780-905 nm), um Konflikte mit optischen Entfernungsmessern zu vermeiden, deren Laser üblicherwiese bei einer Wellenlänge von 1500 nm arbeiten. Weiterhin wurde als vorteilhaft ermittelt, kontinuierlich emittierende Laser zu verwenden, deren emittierter Lichtstrahl in seiner Intensität in Form einzelner Lichtpulse moduliert wird (Pulsmodulation), da solche Laser eine genauere Modulation erlauben als die von selbst pulsierenden Laser mit 1500 nm Emissionswelllenlänge, welche üblicherweise nicht kontinuierlich emittierend betrieben werden können. Die auf diese Weise verbesserte Qualität der Modulation ermöglicht eine Reduktion der Intensität des Lichtsignals bei gleichbleibend gutem Signal- zu Rauschleistungsverhältnis. Dadurch wiederum wird die Sichtbarkeit des Lichtstrahls in Nachtsichtgeräten reduziert und die Anforderungen an die optische Leistung des Lasers sowie die Gefahr von Augenverletzungen vermindert.

Die Abfrage-Einheiten können mit einem Display zur Freund-Feind-Anzeige ausgerüstet werden, um den Empfang oder das Ausbleiben eines gültigen Antwort-Signals anzuzeigen. Zusätzlich oder alternativ zu dem Display kann das Ergebnis des Freund-Feind-Erkennungsvorgangs durch geeignete Leuchtkörper (wie z. B. LEDs) und/oder mittels eines akustischen Signals mitgeteilt werden.

Beim Gebrauch des Systems in der Gefechts-Simulation kann jedes Antwort-Signal mit einer Vielzahl von Detektoren ausgerüstet sein. Das Antwort-Signal transportiert dann Informationen über die/den aktivierten Detektor(en), was der Abfrage-Einheit, welche den zur Abfrage verwendeten Lichtstrahl aussendet, eine Auswahl des zu beleuchtenden Detektors und des ihn tragenden Körperteils ermöglicht. Diese Information kann zur Darstellung der Zielfertigkeit des Abfragenden verwendet werden.

Vorzugsweise ist der Laser auf einer Schusswaffe montiert und ist mit einer Vorrichtung zur Justierung versehen.

Weiterhin kann der Lasersender mit optischen Systemen ausgerüstet werden, welche die Divergenz des emittierten Lichtstrahls beeinflussen. Dadurch kann der zur Abfrage verwendete Lichtstrahl an die Entfernung des Ziels und/oder die vorgesehene Anwendung (Freund-Feind-Erkennung, Gefechtssimulation, Zielübung) angepasst werden.

Im weiteren erstreckt sich die Erfindung auch über die einzelnen Bestandteile der Kommunikations-Anordnung wie z. B. seine Kontrolleinheit und seine Laser-Vorrichtung, die ebenso unabhängig vom System benutzt werden können. Insbesondere kann die Laser-Vorrichtung im Rahmen einer technisch einfachen Simulation von Gefechten verwendet werden, indem mit derselben auf Systeme ohne Signal-Empfänger und/oder Antwort-Einheiten der Kommunikations-Anordnung gezielt wird.
Nachfolgend wird die Erfindung und deren Merkmale anhand von bevorzugten Ausführungsformen unter Bezugnahme auf die anliegenden Zeichnungen im einzelnen näher beschrieben. Es zeigen:
- **Fig. 1**: Einen Soldaten, der eine erste Ausführungsform der Freund-Feind-Erkennungs/Simulations-Ausrüstung trägt,
- **Fig. 2**: die rückseitige Ansicht der Laser-Vorrichtung, die auf dem in ***Fig. 1*** dargestellten Gewehr montiert ist,
- **Fig. 3**: eine Seitenansicht der Laser-Vorrichtung,
- **Fig. 4**: eine Aufsicht der Laser-Vorrichtung,
- **Fig. 5**: einen Querschnitt entlang der in ***Fig. 4*** ersichtlichen Linie V-V,
- **Fig. 6**: ein Blockdiagramm der Elektronik in der Laser-Vorrichtung einer ersten Ausführungsform der vorliegenden Erfindung,
- **Fig. 7**: ein den Abfrage-Vorgang beschreibendes Flussdiagramm,
- **Fig. 8**: ein den Antwort-Vorgang beschreibendes Flussdiagramm,
- **Fig. 9**: eine mögliche Ausführungsform eines Displays für die Ausrüstung,
- **Fig.10**: das Blockdiagramm einer zweiten Ausführungsform der Erfindung,
- **Fig.11**: das Blockdiagramm einer dritten Ausführungsform der Erfindung.

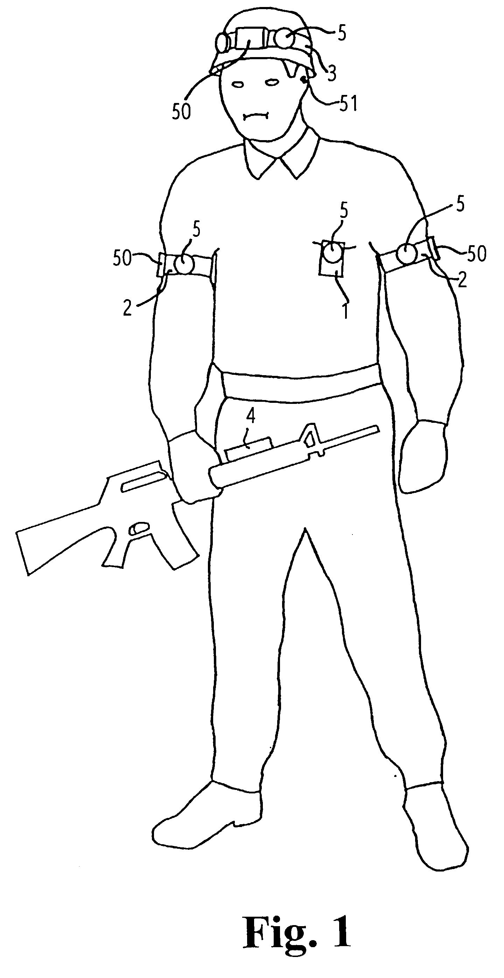

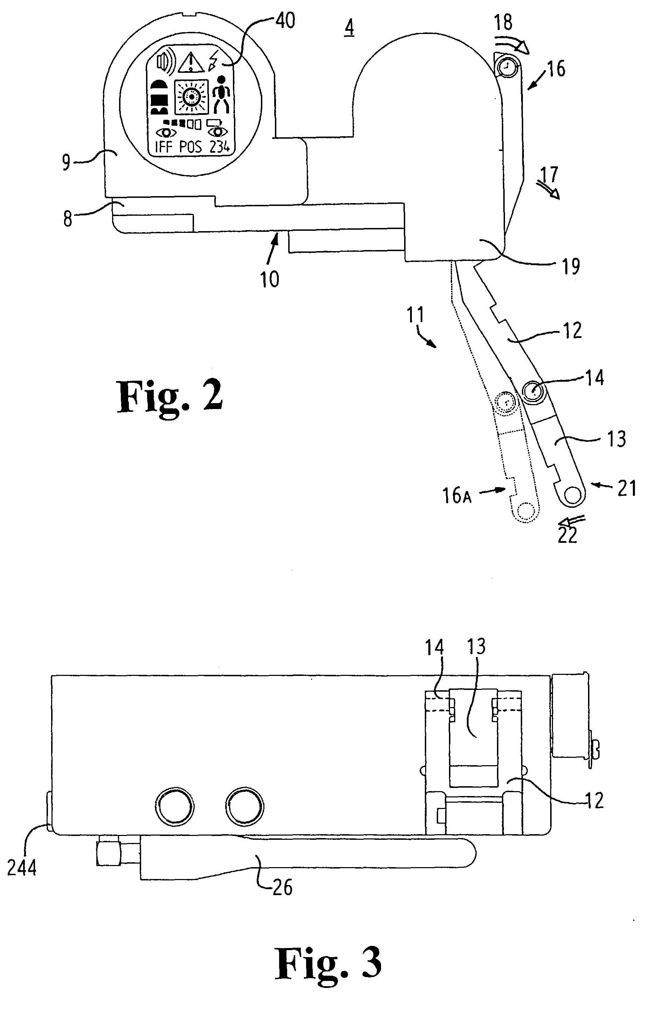

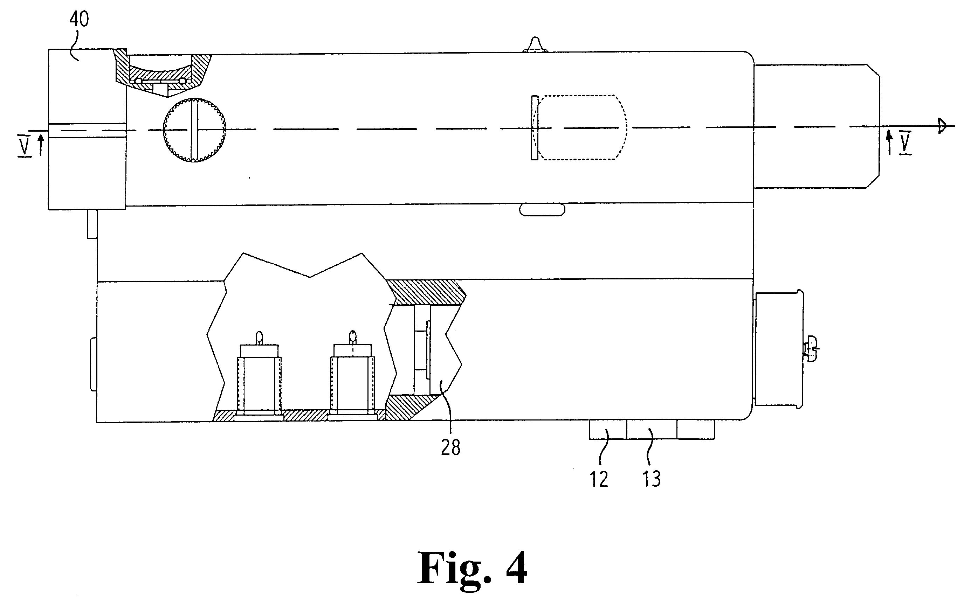

Die grundlegenden Bestandteile eines Gurtsystems einer der bevorzugten Ausführungsformen eines Freund-Feind-Erkennungs/Simulations-Systems sind in **Fig. 1** dargestellt. Sie umfassen: Eine Kontrolleinheit **1**, zwei Arm-Gurtzeuge **2**, ein Helm-Gurtzeug **3** und eine Laser-Vorrichtung **4**. Die Kontrolleinheit **1**, die Arm-Gurtzeuge **2** und das Helm-Gurtzeug **3** sind jeweils mit einem oder mehreren lichtempfindlichen Detektoren **5** ausgestattet, die bevorzugt Licht mit derjenigen Wellenlänge detektieren, welche von der Laser-Vorrichtung **4** abgstrahltes Licht aufweist. In der vorliegenden Ausführungsform ist jedes Arm-Gurtzeug **2** mit zwei auf einander gegenüberliegenden Seiten des Arms positionierten Detektoren und einem Kontroll-Schaltkreis **50** ausgestattet. Das Helm-Gurtzeug **3** trägt vier Detektoren, wobei jeder einzelne einen Winkelbereich von 90 Grad abdeckt, sowie einen Kontrollschaltkreis **50**. Der mechanische Aufbau der Laser-Vorrichtung **4** ist in den **Figuren 2-5** dargestellt. Diese besteht aus einem Gehäuse mit einem Bodenteil **8** und einem Deckel **9**. Eine (der Übersichtlichkeithalber nicht vollständig sichtbar dargestellte) Klammer **10** ist an das Bodenteil des Gehäuses angefügt, um das Gehäuse an einer Schusswaffe zu befestigen.
Die Laser-Vorrichtung **4** - wie sie in **Fig. 2** dargestellt ist- beinhaltet weiterhin einen Hebel **11**, welcher aus einem ersten Teil **12** und einem zweiten Teil **13** besteht, verbunden durch ein erstes Scharnier **14**. Dieser Hebel kann zur Auslösung der Laser-Vorrichtung, zum Einleiten eines Freund-Feind-Erkennungs-Vorganges, eines Zielvorganges, oder zum Auslösen eines simulierten Schusses verwendet werden, wie im folgenden beschrieben wird. Der Hebel **11** hat eine gesicherte AUS-Stellung, die durch eine Ziffer **16** gekennzeichnet ist. In dieser AUS-Stellung lagert der Hebel **11** an einem Seitenteil des Gehäuses **8**, **9** und der zweite Teil **13** ist über das erste Scharnier **14** gefaltet, um innerhalb des U-förmig profilierten ersten Teils **12** zu lagern. Um den Hebel **11** in seine EIN-Stellung zu bewegen, wird das erste Teil **12** um ein zweites Scharnier **19** nach aussen gedreht, wie mit einem Pfeil **17** angedeutet, sowie ebenfalls das zweite an einem Scharnier befestigte Teil **13**, wie durch einen Pfeil **18** angedeutet, um das erste Scharnier **14**. Auf diese Weise kann der Hebel **11** in eine erste, inaktive Ein-Stellung **21** gebracht werden. In dieser Stellung zeigt der Hebel **11** an der aufrecht gelagerten Laser-Vorrichtung **4** gegen den Boden. Eckenflächen der Teile **12** und **13** grenzen aneinander und verhindern eine weitere Drehbewegung des zweiten Teils **13** über das erste Teil **12** hinweg. Wenn das zweite Teil **13** in einer durch einen Pfeil **22** angedeuteten Richtung zur Schusswaffe gedrückt wird, wird der gesamte Hebel **11** nun um das Scharnier **19** gegen den Widerstand einer Feder (nicht dargestellt) in eine aktive EIN-Stellung **16a** gedreht, in welcher von diesem ein Mikroschalter (nicht dargestellt) betätigt wird, und dadurch der Freund-Feind-Erkennungsvorgang und/oder Simulationsvorgänge wie im folgenden beschrieben ausgelöst werden.
Der hier dargestellte Hebel **11** kann in eine sichere, kompakte AUS-Stellung gebracht werden, in der dieser nicht die Handhabung der Waffe behindert. In seiner EIN-Stellung hingegen kann der Hebel **11** vom Nutzer leicht erreicht und zur Aktivierung des Systems betätigt werden. Der Hebel **11** kann von seiner AUS-Stellung in die EIN-Stellung gedreht werden, während die Laser-Vorrichtung **4** auf der Waffe montiert ist, was die Handhabung der Vorrichtung vereinfacht.

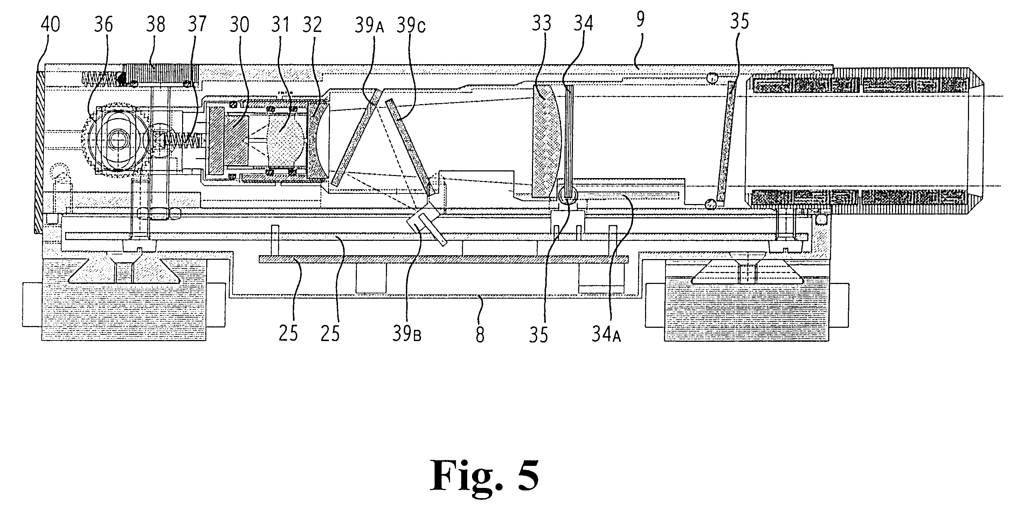

Die Laser-Vorrichtung **4** beinhaltet weiterhin einen Signal-Sender/Empfänger sowie einen Laser-Speiseschaltkreis **25** (**Fig. 5**), welcher im Bodenteil **8** des Gehäuses angeordnet ist, und eine externe Antenne **26** (**Fig. 3**). Die Arbeitsweise dieser Teile wird im folgenden beschrieben:
Der obere Teil **9** des Gehäuses formt zwei halbzylindrische, parallele Kammern, wobei eine der beiden Kammern zur Aufnahme von Batterien **28** zur Stromversorgung eines Diodenlasers und der elektronischen Schaltungen, die andere zur Aufnahme einer Laser-Lichtquelle und von Elektronik vorgesehen ist. Der zwischen den Kammern vorhandene Spalt erlaubt ungehinderte Sicht auf das Ziel.

Die Konstruktion der Laser-Lichtquelle ist in **Fig. 5** dargestellt. Sie besteht aus einem Halbleiter-Laser **30**, einer den Lichtstrahl kollimierenden aus Linsen **31-33** bestehenden Optik, einem holographischen Gitter **34**, und einem Austrittsfenster **35**. Die aus der Massenfertigung stammenden Linsen sind in Hinblick auf die Eigenschaft, einen Lichtstrahl mit einer Divergenz von 0.2-0.5 mrad zu erzeugen, selektiert. Das holographische Gitter **34** ist drehbar um ein Scharnier **35** gelagert. Die Drehung erfolgt mittels eines nicht dargestellten ausserhalb des Gehäuses **8**, **9** angebrachten Knopfes. Wenn dieses Gitter in seine horizontale Stellung **34a** bewegt wird, beeinflusst es den Lichtstrahl nicht. In seiner vertikalen Stellung wird die Divergenz des Lichtstrahls auf 10 mrad erhöht.

Zwischen den Linsen **32** und **33** ist ein Strahlteiler **39a** angebracht, um aus der Laser-Vorrichtung austretendes Licht in den Detektor **39b** zu leiten. Eine weitere Platte **39c**, die symmetrisch zum Strahlteiler **39a** angeordnet ist, kompensiert den durch den Strahlteiler **39a** bedingten Versatz des Lichtstrahls. Der Strahlteiler **39a** und der Detektor **39b** dienen zur Erfassung von Objekten im Ausbreitungspfad des Lichtstrahls. Es kann sich hierbei um Schmutz auf dem Scharnier **35** oder sonstige Hindernisse (wie zum Beispiel ein Blatt) im austretenden Lichtstrahl handeln. Solche Objekte reflektieren einen Teil des Laserlichts und erzeugen hierdurch im Detektor **39b** ein Signal, wodurch der Nutzer gewarnt werden kann. Weiterhin kann der Detektor **39b** zum Empfang eines Antwort-Signals wie im folgenden beschrieben verwendet werden.
Der Halbleiter-Laser **30** emittiert Licht bei einer Wellenlänge von 820 nm mit konstanter Lichtleistung (nicht pulsierend) oder bei einer beliebigen anderen Wellenlänge, vorzugsweise im Bereich zwischen 780 und 905 nm, und besitzt eine Ausgangsleistung von z.B. 50 mW. Wird die Laser-Lichtquelle zusammen mit dem holographischen Gitter **34** betrieben, wodurch der austretende Lichtstrahl eine Divergenz von 10 mrad aufweist, beträgt die Reichweite ungefähr 2 km, ohne holographisches Gitter **34** aufgrund der reduzierten Divergenz von 0.2 mrad hingegen mehr als 10 km. Der Zielvorgang wird bei Distanzen von weniger als 2 km durch das eingefügte holographische Gitter **34** erleichtert.
Die Verwendung eines im nahen Infrarot, d.h. bei einer Wellenlänge von weniger als 1000 nm emittierenden Lasers bedingt verschiedene Vorteile:
- Halbleiter-Laser, die in diesen Wellenlängenbereichen emittieren, können kontinuierlich emittierend betrieben werden. Dadurch kann das emittierte Licht auf einfache Weise präzise moduliert werden, wodurch sich das Signal- zu Rauschleistungsverhältnis im austretenden Lichtstrahl verbessert.
- Überschneidungen mit in Entfernungsmessern benutzten Lasern (mit einer Emissionswellenlänge von 1500 nm) werden vermieden. Vorrichtungen zur Detektion der Emissionen von Entfernungsmessern werden nicht irrtümlich ausgelöst.

Es muss jedoch bemerkt werden, dass die Erfindung auch in Ausführungsformen mit Lasern (oder anderen Lichtquellen), die auf beliebigen Wellenlängen emittieren, realisiert werden kann.
Nach **Fig. 5** kann der Halbleiter-Laser **30** durch Abgleich-Schrauben **36-38** ausgerichtet werden.
Ein LCD-Display **40** ist auf der Rückwand des Oberteils **9** des Gehäuses angebracht. Die Funktion dieses Displays wird im folgenden genauer beschrieben.

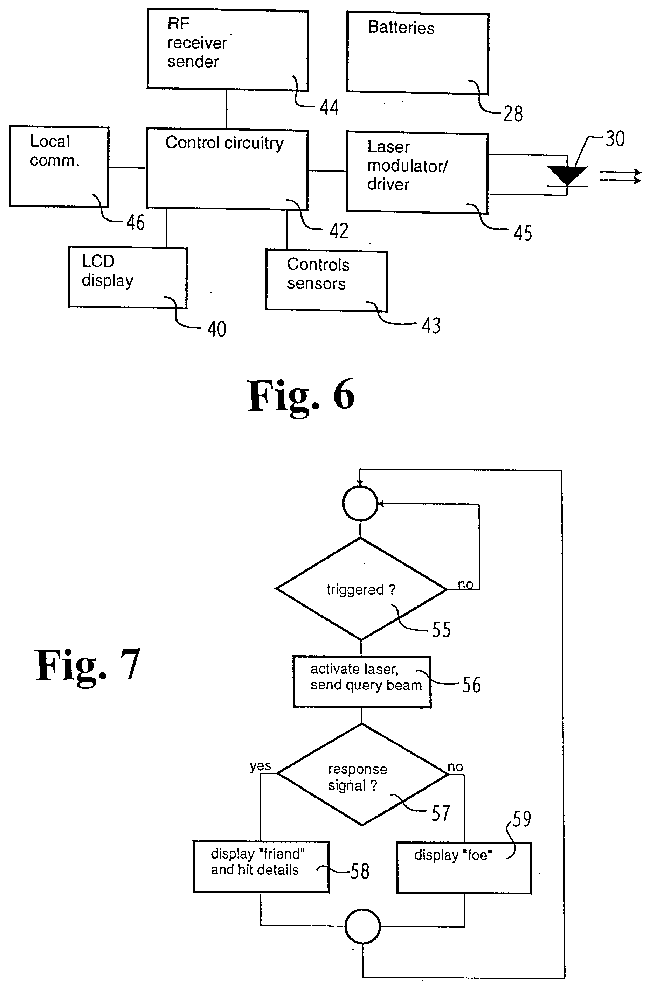

**Fig. 6** zeigt ein Blockdiagramm der in die Laser-Vorrichtung **4** integrierten Elektronik einer ersten, bevorzugten Ausführungsform. Dargestellt sind ein Kontroll-Schaltkreis **42** in Verbindung mit dem LCD-Display **40**, Steuerglieder und Sensoren **43** (einschliesslich des Hebels **11** und des Detektors **39b**), ein Funk-Sender/Empfänger **44**, ein Modulator/Verstärker **45** für die Laserdiode **30** sowie eine lokale Kommunikationsschnittstelle **46**. Alle elektronischen Schaltkreise und Vorrichtungen werden mittels der Batterien **28** betrieben.
Der Funk-Sender/Empfänger **44** kann digitale Signale senden und empfangen und beinhaltet die hierzu geeigneten Modulations- und Demodulations-Schaltungen gemäss dem-Stand der Technik. Die Frequenz, d.h. der Funk-Kanal, des Senders und des Empfängers kann durch den Kontrollschaltkreis **42** festgesetzt werden. In der vorliegenden Ausführungsform kann der Sender/Empfänger **44** auf 32 verschiedenen Kanälen Daten senden und empfangen.

Die lokale Kommunikationsschnittstelle **46** (***Fig. 6***) errichtet und hält die Verbindung mit der Kontrolleinheit **1** (**Fig. 1**), den Arm-Gurtzeugen **2** und dem Helm-Gurtzeug **3**. Für diesen Zweck ist die lokale Kommunikationsschnittstelle **46** mit geeigneten Sendern und Empfängern für Infrarot-, Ultraschall-, Induktions-, Kabel- oder Funk-Kommunikation ausgerüstet. Ähnliche Kommunikationsschnittstellen befinden sich an den einzelnen Elementen **2**, **3** von Gurt-zeugen und in der Kontrolleinheit **1**.
Vor der Beschreibung der Arbeitsweise des Systems wird kurz auf die Konstruktion der Gurtzeug-Elemente **2** und **3** und der Kontrolleinheit **1** eingegangen.
Jedes Gurtsystem-Bestandteil **2**,**3** umfasst einen Gurt, dessen Enden lösbar miteinander verbunden sind, z.B. durch eine Schnalle oder Velcro-Verschlüsse (der Übersichtlcihkeithalber, nicht detailiert dargestellt). Der Gurt trägt einen oder mehrere Detektoren **5**, welche in ihrer Empfindlichkeit auf das durch die Laser-Vorrichtung **4** abgestrahlte Licht sensibilisiert sind, sowie einen Kontrollschaltkreis **50**. Jeder Kontrollschaltkreis **50** beinhaltet eine lokale Kommunikationsschnittstelle, ähnlich der lokalen Kommunikationsschnittstelle **50** der Laser-Vorrichtung **4**. Der Nutzer trägt weiterhin eine Kontrolleinheit **1**, welche ebenfalls mit einem Lichtdetektor **5** und einer Kommunikationsschnittstelle ausgerüstet wird.

In der vorliegenden Ausführungsform trägt der Nutzer getrennte Gurtzeuge an seinen Armen und am Helm, die Kontrolleinheit **1** ist abgesetzt an seiner Kleidung befestigt. Durch diese Anordnung ist das Aufrüsten und das Ablegen des Gurtsystems auch dann leicht zu bewerkstelligen, wenn der Soldat einen Rucksack oder sonstige Ausrüstung mit sich führt. Es ist jedoch auch möglich, die beiden Arm-Gurtzeuge **2** und die Kontrolleinheit **1** zu einem einteiligen Gurtsystem zusammenzufassen. Weiterhin können zusätzliche Detektoren hinzugefügt werden, z.B. durch Anbringung derselben an den Beinen, oder aber auch ein Betrieb mit weniger Detektoren und/oder Gurtsystem-Teilen aufrecht erhalten werden.

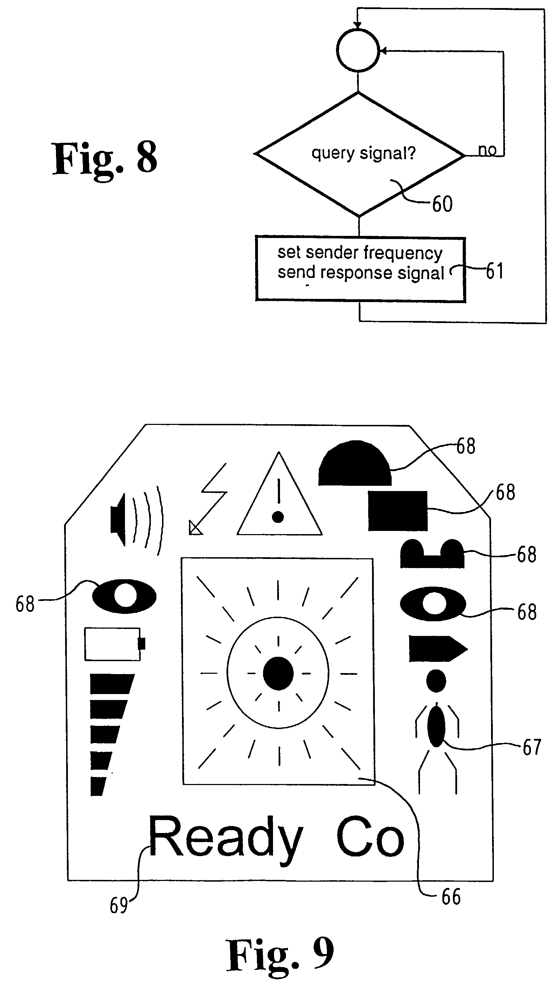

Nachfolgend wird die grundlegende Arbeitsweise des in den **Fig. 1-6** dargestellten Systems anhand der vereinfachten Flussdiagramme in den **Fig. 7** und **8** beschrieben.
In den folgenden Erörterungen ist die den Laser-Lichtstrahl emittierende Ausrüstung des Soldaten mit dem Begriff "Abfrage-Einheit" gekennzeichnet, die den Laser-Lichtstrahl empfangende Ausrüstung des Soldaten trägt die Bezeichnung "Antwort-Einheit". Jedoch soll betont werden, dass in der vorliegenden Ausführungsform die Ausrüstung eines jeden Soldaten alle Bestandteile sowohl einer Abfrage als auch einer Antwort-Einheit beinhaltet, d.h., jeder Soldat kann sowohl abfragen als auch abgefragt werden.

Wie bereits erwähnt, kann das vorliegende System zur Freund-Feind-Erkennung, Gefechts-Simulation oder für Zielübungen verwendet werden. Die grundlegende Funktionsweise gleicht sich bei Freund-Feind-Erkennung und Gefechts-Simulation. Der die Abfrage-Einheit führende Soldat wählt zunächst sein potentielles Ziel durch entsprechende Ausrichtung der Laser-Vorrichtung **4**. Daraufhin betätigt er den Hebel **11**, indem er ihn in seine aktive Ein-Stellung **16a** drückt (**Fig. 2**). Dieser Vorgang wird vom Kontroll-Schaltkreis **42** der Laser-Vorrichtung **4** erfasst, welche die Stellung des Hebels **11** kontinuierlich abtastet, wie in Schritt **55** des Flussdiagrams nach **Fig. 7** dargestellt. Sobald eine Betätigung des Hebels **11** erfasst ist, wird die Laserdiode **30** in Betrieb gesetzt und ein zur Abfrage verwendeter Lichtstrahl ausgesendet (Entscheidigungs-Schritt **56** im Flussdiagramm).
Der zur Abfrage verwendete Lichtstrahl oder das Abfragesignal ist pulscodemoduliert und enthält ein binär codiertes Datenpaket. Dieses Datenpaket beinhaltet die folgenden Abfragedaten:
- einen Frequenzcode mit dem angeforderten Kanal zur Aussendung der Antwort,
- einen Identifikationcode der abfragenden Einheit,
- eine den einzelnen Soldaten kennzeichnende Nummer (Option),
- weitere Daten (Option).
Der Frequenzcode legt den angeforderten Kanal zur Aussendung der Antwort fest, d.h. die Frequenz des Hochfrequenzträgers, mit welchem die Aussendung der Antwort der Antwort-Einheit erwartet wird. Zur Bestimmung einer geeigneten Frequenz überwacht die Abfrage-Einheit ständig alle verfügbaren Frequenzen und führt eine Liste der momentan freien Kanäle. Vor der Aussendung eines Abfragesignals wählt die Abfrage-Einheit einen dieser freien Kanäle als den für die Antwort zu überwachenden Kanal aus.
Der Identifizierungscode enthält eine Identifikation des Abfragenden, wie z.B. eine eindeutig der Ausrüstung des jeweiligen Soldaten zugeordnete Identifikationsnummer sowie sichernde Informationen, die dem Empfänger die positive Überprüfung der Identität des Abfragenden erlaubt.
Weitere Daten können z.B. die Position der abfragenden Einheit, den Typ der Schusswaffe etc. beinhalten.
Wenn der von einem Soldaten durchgeführte Zielvorgang hinreichend genau gewesen ist, wird der zur Abfrage verwendete Lichtstrahl die Antwort-Einheit treffen, in welcher er von einem der Detektoren **5** erfasst wird.

Die Antwort-Einheit überwacht ständig die an ihr angeschlossenen Detektoren, um einen abfragenden Lichtstrahl zu erfassen, wie im Schritt **60** nach **Fig. 8** gezeigt. Sobald die Antwort-Einheit eine Abfragesignal empfängt, wird dessen Identifikationscode überprüft und, sofern die Identifikation positiv ist (d.h., wenn die abfragende Einheit als zur Abfrage der Antwort-Einheit berechtigt erkannt wurde), eine Antwort vorbereitet. Der angeforderte Kanal zur Aussendung der Antwort wird aus dem Abfrage-Signal gewonnen und die Trägerfrequenz des Funk-Senders **44** entsprechend gestellt und über Funk das entsprechende Antwortsignal ausgesendet, wie im Schritt **61** dargestellt.
Das Antwortsignal enthält die folgenden Antwort-Daten:
- den Identifikationscode der Antwort-Einheit,
- Informationen über den/die vom abfragenden Lichtstrahl getroffenen Sensor(en) (Option),
- zusätzliche Daten (Option).
Der Identifikationscode ist wieder ein verifzierbarer Code, welcher die antwortende Einheit identifiziert.
Die Information über den/die Sensor(en), welche da Abfragesignal detektiert haben, identifiziert, welche Sensor(en) der Antwort-Einheit das Signal detektiert hat/haben. Diese Information ist speziell bei Gefechts-Simulationen nützlich.
Weitere Daten können wiederum Informationen über die Position der Antwort-Einheit beinhalten oder andere sachdienliche Daten, die während des Gefechts oder der Simulation nützlich sein könnten. Dies kann auch eine die Antwort-Einheit identifizierende Information sein.
Wenn die Antwort-Einheit ein Abfragesignal erfasst, wird dessen Nutzer nicht alarmiert, mit Ausnahme von Gefechts-Simulationen, in denen dieses Signal zur Anzeige eines Treffers genutzt werden kann. Ein Soldat, der getroffen ist, wird als getötet oder verwundet angenommen. Wenn die Antwort-Einheit eine Vielzahl von Detektoren aufweist, z.B. auf der Brust, den Armen und dem Kopf des Soldaten, kann die Antwort-Einheit auch die getroffenen Detektoren anzeigen, um ein genaueres Bild des simulierten Schadens zu vermitteln. Mittlerweile überwacht die Abfrage-Einheit den ausgewählten Kanal zur Ermittlung der Antwort (Schritt **57**). Bei Empfang des Antwortsignals innerhalb eines gegebenen Zeitraums nach Aussendung des Abfragesignals wird die Identität der antwortenden Einheit überprüft, und, sofern die antwortende Einheit als freundlich identifiziert wurde, mit Schritt **58** fortgefahren. Das Display **40** wird angesteuert, um die abgefragte Einheit als "freundlich" anzuzeigen. Andernfalls wird mit Schritt **59** fortgefahren und die abgefragte Einheit als "feindlich" angezeigt.

Zusätzlich zum Display **40** oder als Alternative hierzu kann das Ergebnis der Freund-Feind-Erkennung mittels einer oder mehrerer LEDs oder mittels eines akustischen Signals dargestellt werden.
Wenn die Abfrage-Einheit ein freundliches Antwortsignal empfängt, kann sie mittels ihres Laser-Lichtstrahles ein Bestätigunssignal zur Antwort-Einheit schicken. Hierdurch wird die Zuverlässigkeit des Systems erhöht. Wird nämlich das Bestätigungssignal von der Antwort-Einheit nicht empfangen, kann das Antwortsignal nochmals ausgesendet werden. Wenn auch der Gebrauch eines solchen Bestätigungssignals bevorzugt wird, ist es nicht erforderlich für die korrekte Arbeitsweise des Systems, daher sind die diesbezüglichen Schritte in den Figuren **7** und **8** nicht gezeigt.

Da die zur Abfrage und Antwort erforderliche Datenmenge vergleichsweise gering ist, können Abfrage- und Antwortsignal von sehr kurzer Dauer sein. Vorzugsweise hat das Antwortsignal eine Dauer in der Grössenordnung einiger Millisekunden. Ohne besondere Vorkehrungen gäbe es allerdings eine nicht unwesentliche Wahrscheinlichkeit, dass sich Antwortsignale mehrerer getroffener Antwort-Einheiten überschneiden.
Um in diesem Fall die Kollision von Datenpaketen zu vermeiden, antwortet eine Antwort-Einheit nicht unmittelbar auf ein Abfragesignal, sondern lässt eine gegebene Verzögerungszeit vor Inbetriebnahme ihres Funk-Senders verstreichen. Diese Verzögerungszeit wird durch einen Zufallszahlengenerator ermittelt, so dass jedes Antwortsignal zu einem anderen Zeitpunkt gesendet wird. Vor Aussendung des Antwortsignals überprüft die Antwort-Einheit die Belegung des angeforderten Kanals. Ein belegter Kanal bewirkt eine weitere zufällige Verzögerung der Aussendung des Antwortsignals.

**Fig. 9** zeigt die mögliche Gestalt des Displays **40**. Dieses Display enthält verschiedene Anzeigen über den Zustand des Systems und zeigt das Ergebnis von Abfrage- oder Simulationstreffern.
Das Ergebnis der Anfrage wird mit einem Symbol **66** dargestellt. Teile dieses Symbols sind ein- oder ausgeschaltet, je nachdem, ob die Antwort-Einheit freundlich oder feindlich ist. Das Symbol **67** ist ein Treffer-Anzeiger. Wenn die Antwort-Einheit Informationen über Treffer auf ihren einzelnen Sensoren meldet, werden die entsprechenden Teile am auf der Abfrage-Einheit dargestellten Symbol ausgeschaltet. Hierdurch ist eine sofortige Rückmeldung über die Zielfertigkeit des Anwenders gewährleistet. Eine Reihe von Symbolen **68** dient zur Anzeige des Zustands von Teilsystemen, genannt seien das Helm-Gurtzeug **3**, die Arm-Gurtzeuge **2**, die Laser-Vorrichtung **4** sowie die Kontrolleinheit **1**. Das Display **40** beinhaltet weiterhin eine numerische oder alphanumerische Anzeigezone, die zur Bestätigung der Eingabe von Betriebsdaten, wie z.B. der Identifikationsdaten der Ausrüstung, verwendet werden kann. Hierfür ist die Kontrolleinheit **1** mit einer numerischen Tastatur ausgerüstet (nicht dargestellt).
Während **Fig. 1** einen Soldaten zeigt, der ein komplettes Gurtsystem einschliesslich einer Abfrage-Einheit sowie einer Antwort-Einheit mit sich führt, ist jedoch hinzuzufügen, dass einige Teilnehmer an einem Gefecht oder einer Simulation auch nur eine Antwort-Einheit oder eine Abfrage-Einheit mit sich führen können. Zivilisten könnten z.B. lediglich mit einer Antwort-Einheit ausgerüstet werden.
Die Laser-Vorrichtung des hier gezeigten Systems kann zur Freund-Feind-Erkennung, Gefechts-Simulation und zum oben beschriebenen Schiessen verwendet werden. Zusätzlich kann sie als Zielhilfe zum genauen Ausrichten einer Waffe auf ein Ziel verwendet werden, wobei der Nutzer eine Nachtsichthilfe zwecks Erkennung des vom Nahinfrarot-Laser beleuchteten Zielpunktes tragen muss.
Der Laser-Lichtstrahl kann ebenso zur Entfernungsmessung und Kommunikation verwendet werden. Für Kommunikationszwecke kann die Kontrolleinheit **1** z.B. mit einer Tastatur versehen werden, welche die Eingabe einer oder mehrerer Nachrichten erlaubt.
Bei der Anwendung des vorliegenden Systems kann speziell während einer Gefechts-Simulation ein zentraler fest installierter Funk-Empfänger zur Überwachung aller von den Antwort-Einheiten abgestrahlten Signale sowie der Darstellung aller Geschehnisse und Verluste verwendet werden, um dadurch der Gefechtsführung ein Instrument zur Beurteilung der Lage zu geben.

Zusätzlich zu den bereits beschriebenen Bestandteilen kann jedes Gurtsystem mit einem Kopfhörer **51** (***Fig. 1***) ausgerüstet werden. Solch ein Kopfhörer kann z.B. ein Signal aussenden, das anzeigt, ob ein vorgegebenes Ziel sich infolge einer entsprechenden Abfrage als freundlich oder feindlich erweist.

Bei Gebrauch des Systems zur Freund-Feind-Erkennung sollte im Gurtsystem ein Mechanismus vorgesehen sein, der bei Entfernung des Systems von seinem ursprünglichen Träger dessen irreversible Ausserbetriebsetzung bewirkt. Zu diesem Zweck kann das Gurtsystem z.B. mit Sensoren versehen werden, die Feuchtigkeit, Temperatur, Puls, menschliche Stimmen oder andere die unmittelbare Nähe eines lebenden menschlichen Körpers anzeigende Werte erfassen. Es können aber auch mechanische Detektoren oder sogenannte 'Sprechdetektoren' (durch Sprachanzeige reagierende Detektoren) vorgesehen werden, die ein Öffnen von Gurtverschlüssen, der Befestigung der Kontrolleinheit etc. anzeigen. Sobald diese Sensoren oder Detektoren wahrnehmen, dass das Gurtsystem (oder Teile hiervon) von seinem ursprünglichen Träger entfernt worden sind, werden die Funktionen des Gurtsystems lahmgelegt, bis ein festgelegter Zugangscode über die Tastatur der Kontrolleinheit eingegeben wird.
In den bisher gezeigten Ausführungsformen war das Antwortsignal ein elektromagnetisches Signal auf Funk-Frequenzen. Es können jedoch auch andere Übertragungsformen für das Antwortsignal gewählt werden.

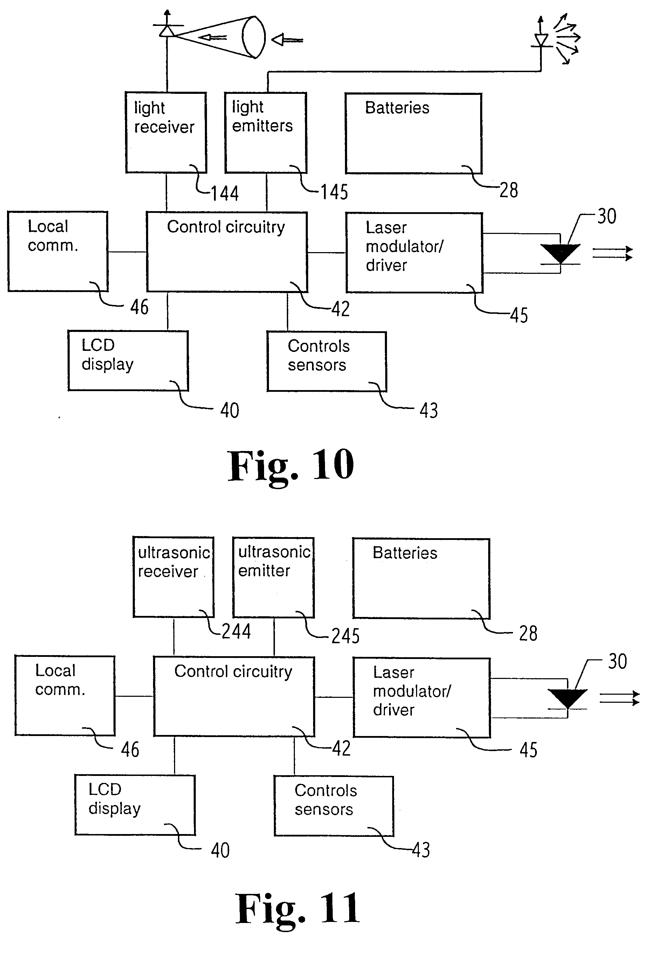

**Fig. 10** zeigt eine zweite Ausführungsform der Erfindung. Im Gegensatz zur in **Fig. 6** gezeigten Ausführungsform werden in der zweiten Ausführungsform ein für Licht ausgelegter Empfänger **144** und Licht emittierende Sender **145** anstatt des Funk-Sender/Empfängers **44** zur Kommunikation zwischen Abfrage- und Antwort-Einheit verwendet.
Wenn eine Antwort-Einheit das Abfragesignal empfängt, sendet sie über den Licht emittierenden Sender **145** das Antwortsignal, z.B. mittels Pulsmodulation. Die Licht emittierenden Sender **145** können aus einer oder mehreren LEDs oder anderen im weiten Winkel emittierenden Lichtquelllen bestehen, die überall auf der Antwort-Einheit angebracht sein können, z.B. am Helm-Gurtzeug oder in jedem Licht-Detektor **5**.

Der auf Licht ausgelegte Empfänger **144** beinhaltet vorzugsweise den Detektor **39b** (siehe **Fig. 5**). Wenn die Laser-Vorrichtung **4** auf die Antwort-Einheit gerichtet ist, bildet die Linse **33** eine abbildende Optik, welche die Antwort-Einheit auf den Detektor **39b** abbildet, so dass der Empfang der Signale der Sender **145** ermöglicht wird.

**Fig. 11** zeigt eine dritte Ausführungsform der Erfindung, in welcher einer oder mehrere Ultraschall-Sender **245** verwendet werden sowie ein Ultraschall-Empfänger **246** zur Kommunikation zwischen Abfrage- und Antwort-Einheit.
Wenn eine Antwort-Einheit ein Abfragesignal empfängt, wird der Ultraschallsender **245** zur Aussendung des Antwort-Signals, z.B. durch Pulsmodulation bei einer Trägerfrequenz von 40kHz verwendet. Der Ultraschallsender **245** kann an beliebiger Stelle der Antwort-Einheit angebracht sein.

Der Ultraschallempfänger **244** besitzt vorzugsweise eine richtungsabhängige Empfindlichkeit und kann z.B. anstatt der Antenne **26** auf der Laservorrichtung **4** angebracht sein. Er empfängt und demoduliert das durch den Ultraschallsender **245** erzeugte Signal der Antwort-Einheit.
In den Ausführungsformen nach **Fig. 10** und **11** kann das Antwortsignal auch auf einer Trägerfrequenz übermittelt werden. In der Ausführungsform nach **Fig. 10** kann diese Trägerfrequenz die Frequenz einer periodischen Modulation der einzelnen Pulse aus den Licht emittierenden Sendern **145** sein. In der Ausführungsform nach **Fig. 11** kann die Trägerfrequenz die Frequenz des durch den Sender **245** abgestrahlten Ultraschallsignals sein. Die anzufordernde Trägerfrequenz kann durch die Empfänger **144** oder **244** der Abfrage-Einheit bestimmt werden, bevor das Abfrage-Signal gesendet wird, und dann zur Antwort-Einheit in dem Frequenz-Code des Abfrage-Signals gesendet werden, der in der ersten Ausführungsform beschrieben wurde. Zum selektiven Empfang eines Antwort-Signals bei der gegebenen Trägerfrequenz sind die Empfänger **144** und **244** der Abfrage-Einheit mit geeigneten Filtern versehen. Dadurch wiederum werden Überschneidungen konkurrenzierender Kommunikationsprozesse vermieden.
Während gegenwärtig bevorzugte Ausführungsformen der Erfindung gezeigt und beschrieben sind, wird ausdrücklich festgestellt, dass sich die Erfindungsgedanken nicht darauf beschränken, sondern auch nach Art der folgenden Ansprüche realisiert und ausgeführt werden können.

## Patentansprüche

1. Anordnung zur Kommunikation unter Teilnehmern eines Gefechtes unter Gefechtsbedingungen, mittels Abfrage- und Antwort-Einheiten,
***dadurch gekennzeichnet, dass***
jede Abfrage-Einheit einen Lasersender einer Laser-Vorrichtung (**4**) zur Abstrahlung eines zur Abfrage verwendeten Lichtstrahls, einen Modulator zur Codierung von Abfrage-Daten auf dem Lichtstrahl, sowie einen Empfänger zum Empfang eines Antwortsignals beinhaltet und jede Antwort-Einheit wenigstens einen Detektor zum Empfang des zur Abfrage verwendeten Lichtstrahls, wenigstens einen Demodulator zur Decodierung der Abfrage-Daten, sowie einen Sender mit wählbarer Trägerfrequenz zur Aussendung von dem Antwort-Signal auf der entsprechenden Trägerfrequenz beinhaltet, wobei diese Trägerfrequenz durch einen Frequenzcode innerhalb der Abfrage-Daten festgelegt ist.

2. Anordnung nach Anspruch **1**,
***dadurch gekennzeichnet, dass***
der Empfänger zur Bestimmung einer augenblicklich unbenutzten Frequenz zwecks Erzeugung des entsprechenden Frequenzcodes oder verschiedener Teilfrequenzen eingerichtet ist.

3. Anordnung nach Anspruch **1**,
***dadurch gekennzeichnet, dass***
jede Abfrage-Einheit ein auf das Antwort-Signal reagierendes Freund-Feind-Anzeigegerät beinhaltet.

4. Anordnung nach Anspruch **1**,
***dadurch gekennzeichnet, dass***
jede Abfrage-Einheit eine Haltevorrichtung zur Montage des Lasersenders der Laser-Vorrichtung (**4**) auf einer Schusswaffe beinhaltet.

5. Anordnung nach Anspruch **4**,
***dadurch gekennzeichnet, dass***
jede Abfrage-Einheit einen Auslöser zur Betätigung des Lasersenders der Laser-Vorrichtung (**4**) umfasst, wobei der Auslöser auf der Haltevorrichtung oder am Laser-Gehäuse selbst montiert ist.

6. Anordnung nach Anspruch **5**,
***dadurch gekennzeichnet, dass***
der Auslöser einen Hebel (**11**) beinhaltet, der eine feste aufwärts gerichtete AUS-Stellung und eine feste abwärts gerichtete EIN-Stellung aufweist, sowie vorzugsweise aus zwei mit einem Scharnier (**14**) verbundenen Teilen besteht.

7. Anordnung nach Anspruch **1**,
***dadurch gekennzeichnet, dass***
der Lasersender der Laser-Vorrichtung (**4**) eine divergente Optik zur Einstellung (Wahl) der Divergenz des besagten zur Abfrage verwendeten Lichtstrahls aufweist.

8. Anordnung nach Anspruch **7**,
***dadurch gekennzeichnet, dass***
die divergente Optik ein holographisches Gitter (**34**) aufweist.

9. Anordnung nach Anspruch **7**,
***dadurch gekennzeichnet, dass***
die divergente Optik eine bewegliche Haltevorrichtung zwecks wahlweiser Entfernung derselben aus dem zur Abfrage verwendeten Lichtstrahl umfasst.

10. Anordnung nach Anspruch **1**,
***dadurch gekennzeichnet, dass***
eine Vielzahl von Gurtsystemen (**2**, **3**) eine der Antwort-Einheiten und wenigstens ein Teil der Gurtsysteme (**2**, **3**) eine der Abfrage-Einheiten sowie einen der Lasersender beinhaltet.

11. Anordnung nach Anspruch **10**,
***dadurch gekennzeichnet, dass***
jedes Gurtsystem (**2**, **3**) eine Vielzahl Detektoren (**5**) umfasst, wobei das Antwortsignal Informationen über die vom zur Abfrage verwendeten Lichtstrahl getroffenen Detektoren enthält.

12. Anordnung nach Anspruch **11**,
***dadurch gekennzeichnet, dass***
jede Abfrage-Einheit ein Display (**40**) aufweist, der anzeigt, welcher der Detektoren (**5**) eines Gurtsystems (**2**, **3**) vom zur Abfrage verwendeten Lichtstrahl getroffen worden ist.

13. Anordnung nach Anspruch **1**,
***dadurch gekennzeichnet, dass***
der Lasersender der Laser-Vorrichtung (**4**) ein Infrarot-Lasersender ist.

14. Anordnung nach Anspruch **13**,
**dadurch gekennzeichnet, dass**
der Lasersender der Laser-Vorrichtung (**4**) Licht mit einer Wellenlänge von weniger als 2000 nm, vorzugsweise von weniger als 1000nm, abstrahlt.

15. Anordnung nach Anspruch **14**,
***dadurch gekennzeichnet, dass***
der Lasersender der Laser-Vorrichtung (**4**) Licht mit einer zwischen 780 und 905 nm liegenden Wellenlänge abstrahlt.

16. Anordnung nach Anspruch **1**,
***dadurch gekennzeichnet, dass***
der Lasersender der Laser-Vorrichtung (**4**) ein mit konstanter Lichtleistung emittierender Diodenlaser ist, der mit Pulscodemodulation betrieben wird.

17. Anordnung nach Anspruch **1**,
***dadurch gekennzeichnet, dass***
der Lasersender der Laser-Vorrichtung (**4**) und besagter Empfänger sich in einem gemeinsamen Gehäuse (**8**, **9**) befinden.

18. Anordnung nach Anspruch **1**,
***dadurch gekennzeichnet, dass***
der Sender ein Funk-Sender, der Empfänger ein Funk-Empfänger, sowie das Antwortsignal ein Funksignal mit der entsprechenden Trägerfrequenz ist.

19. Anordnung nach Anspruch **1**,
***dadurch gekennzeichnet, dass***
der Sender eine Lichtquelle, der Empfänger ein Licht-Detektor, sowie das Antwortsignal ein mit entsprechender Trägerfrequenz moduliertes Lichtsignal ist.

20. Anordnung nach Anspruch **1**,
***dadurch gekennzeichnet, dass***
der Sender eine Ultraschallquelle, der Empfänger ein Ultraschall-Detektor, sowie das Antwortsignal ein Ultraschallsignal mit entsprechender Trägerfrequenz ist.

21. Anordnung nach Anspruch **1**,
***dadurch gekennzeichnet, dass***
sie Mittel umfasst, mit welchem wenigstens einer der Detektoren (**5**) an dem Arm eines Soldaten angebracht werden kann.

22. Anordnung zur Kommunikation in Gefechten, bestehend aus Abfrage- und Antwort-Einheiten,
**dadurch gekennzeichnet, dass**
jede Abfrage-Einheit einen Lasersender der Laser-Vorrichtung (**4**) zur Aussendung eines zur Abfrage verwendeten Lichtstrahls, einen Modulator zur Codierung von Abfrage-Daten auf zur Abfrage verwendeten Lichtstrahl, sowie einen Ultraschallempfänger zum Empfang eines Ultraschallsignals umfasst und dass jede Antwort-Einheit wenigstens einen Detektor (**5**) zum Empfang des zur Abfrage verwendeten Lichtstrahls, wenigstens einen Demodulator zur Dekodierung des zur Abfrage verwendeten Lichtstrahls, sowie einen Ultraschallsender zur Erzeugung des Antwortsignals zur Erwiederung des zur Abfrage verwendeten Lichtstrahls aufweist.

23. Anordnung zur Kommunikation in Gefechten, bestehend aus Abfrage- und Antwort-Einheiten,
***dadurch gekennzeichnet, dass***
jede Abfrage-Einheit einen Lasersender der Laser-Vorrichtung (**4**) zur Aussendung eines zur Abfrage verwendeten Lichtstrahls, einen Modulator zur Codierung von Abfrage-Daten auf zur Abfrage verwendeten Lichtstrahl, sowie einem lichtempfindlichen Empfänger zum Empfang eines Antwort-Signals beinhaltet und dass jede Antwort-Einheit wenigstens einen Detektor zum Empfang des zur Abfrage verwendeten Lichtstrahls, wenigstens einen Demodulator zur Dekodierung des zur Abfrage verwendeten Lichtstrahls, sowie wenigstens eine im weiten Winkel emittierende Lichtquelle zur Abstrahlung des Antwort-Signals zur Erwiederung des zur Abfrage verwendeten Lichtstrahls umfasst.

24. Anordnung nach Anspruch **23**,
***dadurch gekennzeichnet, dass***
die Abfrage-Einheit eine auf eine Laser-Lichtquelle abgeglichene Optik beinhaltet, die zusätzlich zur Abbildung der Antwort-Einheit auf dem lichtempfindlichen Empfänger verwendet wird.

25. Verfahren zur Kommunikation in Gefechten mittels einer Abfrage- und einer Antwort-Einheit,
***dadurch gekennzeichnet, dass***
nach der Bestimmung einer oder mehreren freien Trägerfrequenzen in einer Abfrage-Einheit ein zur Abfrage verwendeter Lichtstrahl von der Abfrage-Einheit zu der Antwort-Einheit geschickt wird, der zur Abfrage verwendeter Lichtstrahl mit Daten betreffs der entsprechenden freien Trägerfrequenzen moduliert worden ist, der zur Abfrage verwendete Lichtstrahl in der Antwort-Einheit empfangen wird, der zur Abfrage verwendete Lichtstrahl dort zur Erlangung der freien Trägerfrequenzen demoduliert wird und ein Antwort-Signal zur Erwiederung des zur Abfrage verwendeten Lichtstrahls mit der entsprechenden freien Trägerfrequenzen erzeugt wird.

26. Verfahren nach Anspruch **25**,
***dadurch gekennzeichnet, dass***
zusätzlich zu den genannten Schritten die Erzeugung des Antwort-Signals nach Empfang des zur Abfrage verwendeten Lichtstrahls um eine zufällige Zeit verzögert wird.

27. Verfahren nach Anspruch **25**,
***dadurch gekennzeichnet, dass***
ein Identifikationscode in das Antwortsignal eingefügt wird, um die Antwort-Einheit zu identifizieren.

28. Verfahren nach Anspruch **25**,
***dadurch gekennzeichnet, dass***
das Antwortsignal ein Funksignal ist.

29. Verfahren nach Anspruch **25**,
***dadurch gekennzeichnet, dass***
das Antwortsignal ein Ultraschallsignal ist.

30. Verfahren nach Anspruch **25**,
***dadurch gekennzeichnet, dass***
das Antwortsignal ein sichtbares oder unsichtbares Lichtsignal ist.

31. Vorrichtung zur Montage auf einer Schusswaffe, bestehend aus einem Gehäuse (**8**, **9**), Mittel an der Bodenseite des Gehäuses zur Anfügung des Gehäuses an die Schusswaffe, einer im Gehäuse angeordneten Laser-Lichtquelle, welche in Längsrichtung einen Lichtstrahl aussendet, einem drehbar mit dem Gehäuse verbundenem Schalthebel, der in seiner AUS-Stellung entgegengesetzt zur Oberseite oder Breitseite des Gehäuses gelagert ist, in seiner EIN-Stellung sich vom Gehäuse in abwärtiger Richtung erstreckt.

32. Vorrichtung nach Anspruch **31**,
***dadurch gekennzeichnet, dass***
der Schalthebel (**11**) ein erstes Teil (**12**) beinhaltet, welches drehbar mit dem Gehäuse verbunden ist sowie ein zweites Teil (**13**), welches drehbar mit dem ersten Teil (**12**) verbunden ist, wobei in EIN-Stellung das zweite Teil (**13**) so gedreht werden kann, um die Länge des gesamten Hebels (**11**) zu vergrössern.
